# EUROPÄISCHE PATENTANMELDUNG

(11) **EP 1 810 867 A2**
(43) Veröffentlichungstag der Anmeldung: **25.07.2007**
(21) Anmeldenummer: 06025180.8
(22) Anmeldetag: 06.12.2006
(51) Int. Cl.: B60K 17/04, F16H 3/087, F16H 57/02

(54) **Zahnräderwechselgetriebe mit einem nachgeschalteten, konstant übersetzten Zusatzantrieb**

(30) Priorität: 21.01.2006 DE 102006002968
(71) Anmelder: ZF FRIEDRICHSHAFEN AG, 88038 Friedrichshafen (DE)
(72) Erfinder: Müller, Walter, 88046 Friedrichshafen (DE)

(57) **Zusammenfassung**

Die Erfindung beinhaltet ein Zahnräderwechselgetriebe (1) mit einem nachgeschalteten, konstant übersetzten Zusatzantrieb (20), dessen rotierendes Element (18) auf einer Welle (17) angeordnet ist. Die Welle (17) ist in einem Gehäuse (21) gelagert und im Nebenabtrieb von einer Getriebeabtriebswelle (3) des Zahnräderwechselgetriebes (1) über einen ins Schnelle übersetzten Stirnradtrieb antreibbar. Das Rückwärtsgangrad (26) des Zahnräderwechselgetriebes (1) ist mit der Getriebeabtriebswelle (3) fest verbunden und dient gleichzeitig als Hochtreiberrad für den Zusatzantrieb (20).

## Beschreibung

Die Erfindung betrifft ein Zahnräderwechselgetriebe mit einem nachgeschalteten, konstant übersetzten Zusatzantrieb nach der im Oberbegriff von Anspruch 1 näher definierten Art.

Neben den Betriebsbremsen eines Fahrzeuges, insbesondere eines Nutzfahrzeuges, die im Regelfall einem Verschleiß unterliegende Reibungsbremsen sind, werden zusätzliche, verschleißfreie Verzögerungseinrichtungen, wie Retarder, von den Fahrzeugherstellern angeboten. Zu den Retardern zählen sowohl zusätzlich am Getriebe oder Motor angeordnete hydrodynamische, hydrostatische oder elektrodynamische Bremseinrichtungen, als auch solche Systeme, die in Form eines "Intarders" innerhalb des Getriebegehäuses vorgesehen sind. Des Weiteren werden Retarder in Primärretarder, die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest. Der Retarder ist üblicherweise nicht aktiviert, wenn Rotor und Stator nicht mit Flüssigkeit gefüllt sind.

In der DE 41 08 658 C2 wird ein Zahnräderwechselgetriebe erwähnt, bei welchem ein zweiflutiger Retarder über einen als Hochtreiber dienenden Stirnradtrieb angetrieben wird. Am Gehäuseteil des Zahnräderwechselgetriebes ist das Retardergehäuse angeflanscht, welches sowohl in radialer als auch in axialer Richtung des Zahnräderwechselgetriebes relativ weit über dessen Au-βenkontur vorsteht und daher einen relativ großen Einbauraum benötigt. Zur Erzielung eines ausreichenden Bremsmoments des Retarders müssen eine möglichst große Übersetzung ins Schnelle und möglichst große Durchmesser von Rotor und Stator der Retardereinheit eingehalten werden. Aufgrund der beim Stand der Technik gewählten Anordnung des hydrodynamischen Retarders am Zahnräderwechselgetriebe entstehen bereits relativ große bauliche Abmessungen, und eine Veränderung der Übersetzung der Hochtreiberstufe oder des Durchmessers von Rotor und Stator hätten zwangsläufig nochmals eine wesentliche Vergrößerung der radialen Abmessungen zur Folge.

Ebenfalls ist in der DE 41 08 658 C2 ein Zahnräderwechselgetriebe mit einem nachgeschalteten, hydrodynamischen Retarder beschrieben, bei dem die aus Rotor und Stator bestehende Einheit mit ihrem äußeren Umfang sehr nahe an die Getriebeabtriebswelle herangeführt ist, wobei für diesen Zweck zwischen dem Wälzlager der Getriebeabtriebswelle und dessen Abtriebsflansch ein Einbauraum genutzt wird. Dadurch können bei vorgegebener Einbaugrenze für die radialen Abmessungen von Zahnräderwechselgetriebe und Retarder der Durchmesser des Rotors und des Stators möglichst groß ausgeführt werden. Weiterhin wird durch diese Anordnung die Möglichkeit geschaffen, die Übersetzung des Stirnradtriebes ins Schnelle zu erhöhen.

Der vorliegenden Erfindung liegt die Aufgabe zugrunde, an einem Zahnräderwechselgetriebe mit einem nachgeschalteten, konstant übersetzten Zusatzantrieb die baulichen Abmessungen dieser Einheit zu reduzieren und Einsparpotentiale aufzuzeigen.

Die der Erfindung zugrunde liegende Aufgabe wird durch ein, auch die kennzeichnenden Merkmale des Hauptanspruchs aufweisendes, gattungsgemäßes Zahnräderwechselgetriebe mit einem nachgeschalteten, konstant übersetzten Zusatzantrieb gelöst.

Bei dem erfindungsgemäßen Zahnräderwechselgetriebe mit nachgeschaltetem, konstant übersetzten Zusatzantrieb dient das Rückwärtsgangrad, welches fest auf der Getriebeabtriebswelle angeordnet ist und zu einer Übersetzungsstufe zur Realisierung des Rückwärtsganges gehört, gleichzeitig als Hochtreiberrad für den Zusatzantrieb.
Der Zusatzantrieb kann beispielsweise als hydrodynamischer, hydrostatischer oder elektrodynamischer Retarder ausgebildet sein. Außerdem sind als Zusatzantriebe Nebenabtriebe, wie beispielsweise Pumpen oder Kompressen, denkbar.

In der nachfolgenden Bescheibung wird als Zusatzantrieb ein Retarder angenommen.
Über ein Zahnrad, welches mit dem Rückwärtsgangrad kämmt, werden die Rotorwelle und somit auch der Rotor des Retarders angetrieben. Der Stator des Retarders ist fest mit dem Retardergehäuse verbunden. Die drehmomentübertragende Verbindung zwischen Vorgelegewelle und Getriebeabtriebswelle zur Realisierung des Rückwärtsganges erfolgt über ein Zwischenradpaar. Das Zwischenradpaar besteht aus zwei Zahnrädern, welche auf einer Zwischenwelle angebracht sind. Zur Realisierung des Rückwärtsganges wird ein Zahnrad des Zwischenradpaares axial verschoben und über eine Klauenschaltung mit dem zweiten Zahnrad, welches fest auf der Zwischenwelle angeordnet ist, in oder außer Eingriff gebracht. Je nach Schalteinrichtung kann das eine oder das andere Zahnrad verschoben werden. Ebenso ist denkbar, dass ein Zahnrad des Zwischenradpaares fest auf der Zwischenwelle angebracht ist und das zweite Zahnrad über eine Klauenschaltung, beispielsweise mit einer Synchronisiereinrichtung, mit der Zwischenwelle verbindbar ist. Ein Zahnrad des Zwischenradpaares kämmt dabei mit dem Rückwärtsgangrad auf der Getriebeabtriebswelle und das andere Zahnrad des Zwischenradpaares kämmt mit einem Zahnrad auf der Vorgelegewelle. Sind beide Zahnräder des Zwischenradpaares fest mit der Zwischenwelle verbunden, dann ist der Rückwärtsgang eingelegt. Die Vorgelegewelle kann verkürzt ausführbar sein und beispielsweise noch vor dem Zahnrad, welches mit dem Rückwärtsgangrad kämmt, enden. Dabei endet die Vorgelegewelle getriebeabtriebsseitig vor dem ins Schnelle übersetzenden Hochtreiberstirnradtrieb, sodass der Hochtreiberstirnradtrieb zwischen der abtriebsseitigen Lagerung der Vorgelegewelle und der abtriebsseitigen Lagerung der Getriebeabtriebswelle angeordnet ist.
Bei dem beschriebenen Zahnräderwechselgetriebe wird durch die Doppelnutzung des Rückwärtsgangrades ein separates Hochtreiberrad mit großem Durchmesser für den Retarder eingespart, wodurch der Bauraum reduziert wird.

Bei einer weiteren Ausführungsform des erfindungsgemäßen Zahnräderwechselgetriebes können zwei Zahnräder eingespart werden. Auch bei dieser Ausführungsform wird durch die Doppelnutzung des Rückwärtsgangrades ein separates Hochtreiberrad mit großem Durchmesser für den Retarder eingespart. Über ein Zahnrad, welches mit dem Rückwärtsgangrad kämmt und mit der Rotorwelle des Retarders fest verbunden ist, werden die Rotorwelle und somit auch der Rotor des Retarders angetrieben. Dieses Zahnrad gehört nun gleichzeitig zum Zwischenradpaar, welches zur Realisierung des Rückwärtsganges verwendet wird. Die Zwischenwelle des Zwischenradpaares ist vorzugsweise im Zahnrad, welches mit der Rotorwelle des Retarders verbunden ist und mit dem Rückwärtsgangrad kämmt, gelagert. Das zweite Zahnrad des Zwischenradpaares ist drehfest auf der Zwischenwelle angebracht und kämmt mit der Vorgelegewelle. Die drehmomentübertragende Verbindung zwischen Vorgelegewelle und Getriebeabtriebswelle zur Realisierung des Rückwärtsganges erfolgt über eine Schalteinrichtung, beispielsweise über eine Klauenschaltung mit Synchronisiereinrichtung, über die die Zwischenwelle des Zwischenradpaares fest mit dem Zahnrad, welches mit dem Rückwärtsgangrad kämmt, verbunden wird. Im Bereich des Rückwärtsgangrades und des Zahnrades, welches mit dem Rückwärtsgangrad kämmt, ist die Vorgelegewelle so bearbeitet, dass keine Verbindung der beiden Zahnräder zur Vorgelegewelle entstehen kann.

Durch den Wegfall eines separaten Hochtreiberrades und die Doppelnutzung eines weiteren Zahnrades werden somit zwei Zahnräder eingespart und die Getriebeeinbaulänge verkürzt. Der Platzgewinn kann auch für einen Retarder genutzt werden, welcher mit Zielrichtung minimale radiale Bauform im Kraftfahrzeug optimiert wurde. Dabei wird das Größen bestimmende Stator-Rotor-Paket des Retarders noch vor dem Abtriebsflansch der Getriebeabtriebswelle angeordnet.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Zahnräderwechselgetriebe gemäß dem Stand der Technik,
- Fig. 2: ein Zahnräderwechselgetriebe mit Doppelnutzung von einem Zahnrad,
- Fig. 3: ein Zahnräderwechselgetriebe mit Doppelnutzung von zwei Zahnrädern und
- Fig. 4: ein Zwischenradpaar des Zahnräderwechselgetriebes.

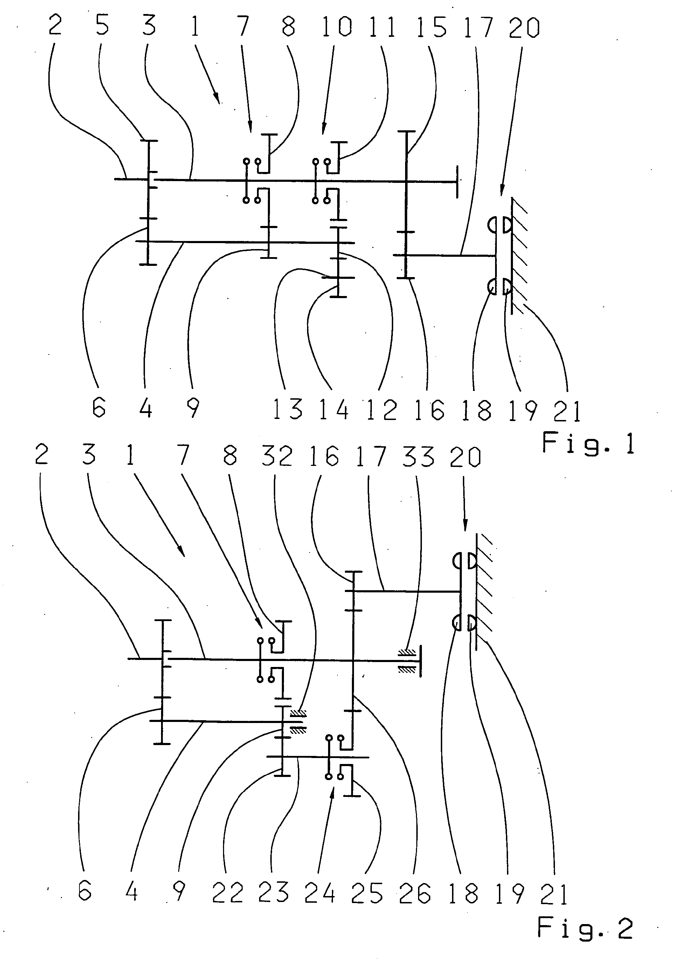

Die Fig. 1 zeigt eine Darstellung eines Zahnräderwechselgetriebes 1 bei dem die Realisierung des Rückwärtsganges und der Antrieb eines Retarders 20 über separate Zahnräder 11 und 15 erfolgen. Ein Zahnrad 5 ist fest an einer Getriebeeingangswelle 2 angeordnet oder mit der Getriebeeingangswelle 2 aus einem Stück angefertigt. Ein Zahnrad 8 ist drehbar auf einer Getriebeabtriebswelle 3 angeordnet und durch eine Schaltkupplung 7 drehfest mit der Getriebeabtriebswelle 3 verbindbar zur Bildung einer Drehmomentübertragung in einer Gangstufe. Beide Zahnräder 5 und 8 kämmen mit fest auf einer Vorgelegewelle 4 angeordneten Zahnrädern 6 und 9. Zur Realisierung des Rückwärtsganges ist ein Zahnrad 11 durch eine Schaltkupplung 10 drehfest mit der Getriebeabtriebswelle 3 verbindbar. Das Zahnrad 11 kämmt mit einem Zahnrad 14, welches drehbar auf einem Bolzen 13 angebracht ist. Das Zahnrad 14 befindet sich mit einem weiteren Zahnrad 12 im Eingriff, welches drehfest auf der Vorgelegewelle 4 angeordnet ist. Durch das Zahnrad 14 wird die Drehrichtungsumkehr zur Realisierung des Rückwärtsganges ermöglicht. Auf der Getriebeabtriebswelle 3 ist das Zahnrad 15 drehfest angeordnet, welches mit einem auf einer Rotorwelle 17 drehfest angeordnetem Zahnrad 16 kämmt. Mit der Rotorwelle 17 ist ein Rotor 18 des Retarders 20 fest verbunden, dem der am Retardergehäuse 21 angeordnete Stator 19 zugeordnet ist.

Die Fig. 2 zeigt eine erste Darstellung eines erfindungsgemäßen Zahnräderwechselgetriebes 1, bei dem ein Zahnrad 26 gleichzeitig als Rückwärtsgangrad und Hochtreiberrad für den Retarder 20 dient. Über das auf der Vorgelegewelle 4 drehfest angeordnete Zahnrad 9 wird ein weiteres Zahnrad 22 angetrieben. Das Zahnrad 9 kann auch als direkte Verzahnung auf der Vorgelegewelle 4 herausgearbeitet sein. Der Bolzen 13 (nach Fig. 1) wird durch eine Zwischenwelle 23 ersetzt, auf welcher das Zahnrad 22 drehfest angeordnet ist. Ein Zahnrad 25 ist drehbar auf der Zwischenwelle 23 gelagert und über eine Schaltkupplung 24, beispielsweise eine Klauenschaltung, fest mit der Zwischenwelle 23 verbindbar. Zur Realisierung des Rückwärtsganges wird die Schaltkupplung 24 betätigt und das Zahnrad 25 fest mit der Zwischenwelle 23 verbunden. Das Zahnrad 25 kämmt mit dem auf der Getriebeabtriebswelle 3 fest angebrachten Zahnrad 26, wodurch es zur Drehrichtungsumkehr der Getriebeabtriebswelle 3 und somit zur Realisierung des Rückwärtsganges kommt. Das Zahnrad 26 steht mit dem Zahnrad 16 im Eingriff, welches drehfest mit der Rotorwelle 17 verbunden ist, über die der Rotor 18 des Retarders 20 angetrieben wird. Durch die Doppelnutzung des Zahnrades 26 wird ein separates Zahnrad 15 (nach Fig. 1) mit großem Durchmesser für den Retarder 20 eingespart. Die Vorgelegewelle 4 ist abtriebsseitig in einer Lagerung 32 gelagert, während eine Lagerung 33 für die Getriebeabtriebswelle 3 abtriebsseitig vorgesehen ist.

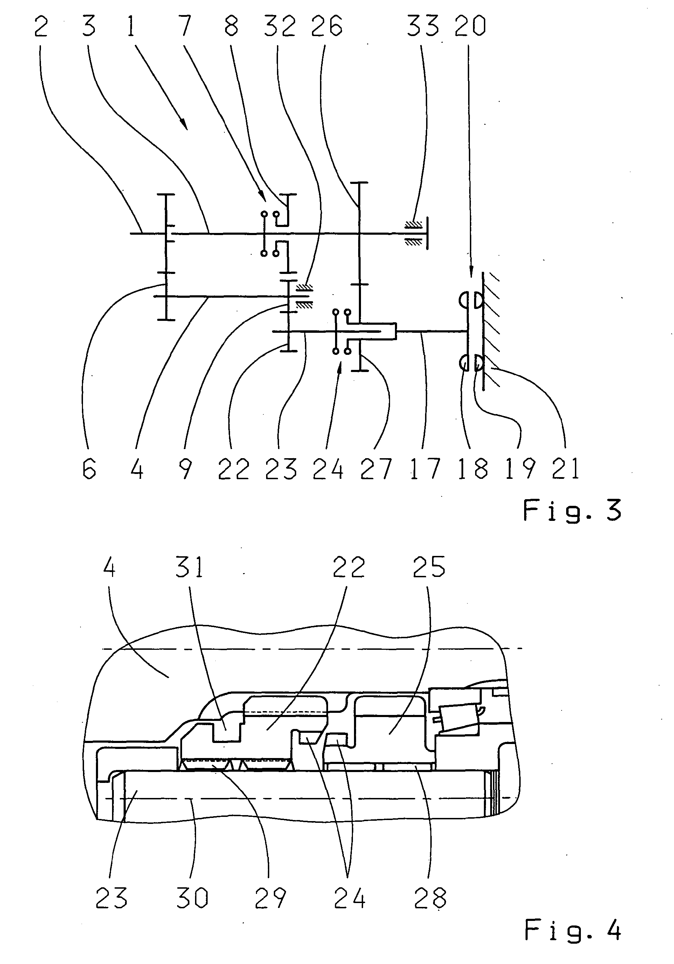

Die Fig. 3 zeigt ebenfalls ein Zahnräderwechselgetriebe 1, bei dem das Zahnrad 26 gleichzeitig als Rückwärtsgangrad und Hochtreiberrad für den Retarder 20 dient. Im Unterschied zur Fig. 2 ist die Rotorwelle 17, welche den Rotor 18 des Retarders 20 antreibt, erfindungsgemäß mit einem Zahnrad 27 fest verbunden. Die Rotorwelle 17 und das Zahnrad 27 können ebenso aus einem Stück angefertigt sein. Die Zwischenwelle 23 ist im Zahnrad 27 drehbar gelagert und kann durch die Schaltkupplung 24 drehfest mit dem Zahnrad 27 verbunden werden. Durch den Wegfall des separaten Zahnrades 15 (nach Fig. 1) für den Retarder 20 und die Doppelnutzung des Zahnrades 27 werden somit zwei Zahnräder eingespart, wodurch sich die Getriebeeinbaulänge verkürzt.

Die Fig. 4 zeigt ein Zwischenradpaar 22, 25 auf der Zwischenwelle 23. Das Zahnrad 22 ist über eine Verzahnung 29 drehfest auf der Zwischenwelle 23 angeordnet und kämmt mit der Vorgelegewelle 4. Ebenso ist es axial verschiebbar entlang einer Achse 30 der Zwischenwelle 23. Das zweite Zahnrad 25 des Zwischenradpaares 22, 25 ist durch eine Lagerung 28 auf der Zwischenwelle 23 drehbar gelagert. Durch axiales Verschieben des Zahnrades 22 in der Zeichenblattebene nach rechts, wird über die Schaltkupplung 24, beispielsweise eine Klauenschaltung, eine drehmomentübertragende Verbindung zwischen Vorgelegewelle 4 und Getriebeabtriebswelle 3 (nach Fig. 3) hergestellt. Die Vorgelegewelle 4 ist im Bereich des Zahnrades 25 so bearbeitet, dass keine direkte Verbindung des Zahnrades 25 zur Vorgelegewelle 4 entsteht. Zur axialen Verschiebung des Zahnrades 22 greift eine hier nicht gezeigte Schaltgabel oder Schaltschwinge in die Aussparung 31 am Zahnrad 22 ein.

### Bezugszeichen

- 1: Zahnräderwechselgetriebe
- 2: Getriebeeingangswelle
- 3: Getriebeabtriebswelle
- 4: Vorgelegewelle
- 5: Zahnrad
- 6: Zahnrad
- 7: Schaltkupplung
- 8: Zahnrad
- 9: Zahnrad
- 10: Schaltkupplung
- 11: Zahnrad
- 12: Zahnrad
- 13: Bolzen
- 14: Zahnrad
- 15: Zahnrad
- 16: Zahnrad
- 17: Rotorwelle
- 18: Rotor
- 19: Stator
- 20: Retarder
- 21: Retardergehäuse
- 22: Zahnrad
- 23: Zwischenwelle
- 24: Schaltkupplung
- 25: Zahnrad
- 26: Zahnrad
- 27: Zahnrad
- 28: Lagerung
- 29: Verzahnung
- 30: Achse
- 31: Aussparung
- 32: Lagerung
- 33: Lagerung

## Patentansprüche

1. Zahnräderwechselgetriebe (1) mit wenigstens einer Vorgelegewelle (4) und einem nachgeschalteten, konstant übersetzten Zusatzantrieb (20), dessen rotierendes Element (18) auf einer Welle (17) angeordnet ist, die von einer Getriebeabtriebswelle (3) des Zahnräderwechselgetriebes (1) über einen Stirnradtrieb antreibbar ist, **dadurch gekennzeichnet, dass** ein Rückwärtsgangrad (26) des Zahnräderwechselgetriebes (1) mit der Getriebeabtriebswelle (3) fest verbunden ist und gleichzeitig als Treiberrad für den Zusatzantrieb (20) dient.

2. Zahnräderwechselgetriebe (1) nach Anspruch 1, **dadurch gekennzeichnet, dass** die drehmomentübertragende Verbindung zwischen Vorgelegewelle (4) und Getriebeabtriebswelle (3) zur Realisierung des Rückwärtsganges über eine Zwischenwelle (23) mit einem Zwischenradpaar (22, 25, 27) erfolgt.

3. Zahnräderwechselgetriebe (1) nach Anspruch 2, **dadurch gekennzeichnet, dass** ein erstes Zahnrad (22) des Zwischenradpaares (22, 25, 27) drehfest mit der Zwischenwelle (23) verbunden ist und mit einem Zahnrad (9) auf der Vorgelegewelle (4) kämmt und ein zweites Zahnrad (25, 27) des Zwischenradpaares (22, 25, 27) drehbar auf der Zwischenwelle (23) angebracht ist und mit dem Zahnrad (26) auf der Getriebeabtriebswelle (3) kämmt.

4. Zahnräderwechselgetriebe (1) nach Anspruch 2 oder 3, **dadurch gekennzeichnet, dass** die Realisierung des Rückwärtsganges über eine Schaltkupplung (24) erfolgt, welche das drehbar auf der Zwischenwelle (23) angeordnete Zahnrad (25, 27) drehfest mit dem drehfest auf der Zwischenwelle (23) angeordneten Zahnrad (22) verbindet und somit die drehmomentübertragende Verbindung zwischen Vorgelegewelle (4) und Getriebeabtriebswelle (3) herstellt.

5. Zahnräderwechselgetriebe (1) nach Anspruch 4, **dadurch gekennzeichnet, dass** die Schaltkupplung (24) als Klauenschaltung ausgeführt ist.

6. Zahnräderwechselgetriebe (1) nach einem der vorangegangenen Ansprüche, **dadurch gekennzeichnet, dass** die Vorgelegewelle (4) im Bereich des Rückwärtsgangrades (26) und des Zahnrades (25, 27) so bearbeitet ist, dass kein Eingriff der Zahnräder (25, 26, 27) mit der Vorgelegewelle (4) stattfindet.

7. Zahnräderwechselgetriebe (1) nach einem der vorangegangenen Ansprüche, **dadurch gekennzeichnet, dass** der Stirnradtrieb (16, 25, 26, 27) zwischen der abtriebsseitigen Lagerung (32) der Vorgelegewelle (4) und der abtriebsseitigen Lagerung (33) der Getriebeabtriebswelle (3) angeordnet ist.

8. Zahnräderwechselgetriebe (1) nach einem der vorangegangenen Ansprüche, **dadurch gekennzeichnet, dass** das Zahnrad (27), welches mit dem Rückwärtsgangrad (26) kämmt, mit der Welle (17) des Zusatzantriebs (20) fest verbunden ist und gleichzeitig als Aufnahme für eine Lagerung der Zwischenwelle (23) dient.

9. Zahnrädenruechselgetriebe (1) nach einem der vorangegangenen Ansprüche, **dadurch gekennzeichnet, dass** der Zusatzantrieb als ein Retarder (20) mit einem Rotor (18) als rotierendes Element auf einer Rotorwelle (17) ausgebildet ist, bei dem der Stirnradantrieb (16, 25, 26, 27) ins Schnelle übersetzt ist und das Rückwärtsgangrad (26) als Hochtreiberrad für den Retarder (20) dient.

10. Zahnräderwechselgetriebe (1) nach Anspruch 9, **dadurch gekennzeichnet, dass** der Retarder (20) hydrodynamisch, hydrostatisch oder elektrodynamisch augebildet ist.
